# EUROPEAN PATENT SPECIFICATION

(11) **EP 4 440 920 B1**
(45) Date of publication and mention of the grant of the patent: **14.10.2026**
(21) Application number: 21835604.6
(22) Date of filing: 01.12.2021
(51) Int. Cl.: B63B 1/04, B63B 1/12, B63B 35/44

(54) **FLOATING FOUNDATION FOR AN OFFSHORE WIND TURBINE**
SCHWIMMENDE GRÜNDUNG FÜR EINE OFFSHORE-WINDTURBINE
FONDATION FLOTTANTE POUR ÉOLIENNE EN MER

(43) Date of publication of application: 09.10.2024
(73) Proprietor: Maridea B.V., 2611 HD Delft (NL)
(72) Inventor: LUSTHOF, Jeroen, 2544 NX The Hague (NL); SCHUILING, Christiaan, 3264 LH Nieuw-Beijerland (NL); GROOTE WOORTMANN, Paul, 2613 TC Delft (NL)
(74) Representative: Nederlandsch Octrooibureau
(86) International application number: PCT/EP2021/083837
(87) International publication number: WO 2023/098994

(56) References cited:
- US-B2- 8 471 396

## Description

### Field of the invention

The present invention relates to floating foundations, in particular for supporting offshore wind turbines and to methods of constructing and installing such foundations and turbines.

### Background art

Floating wind turbines are an excellent source of renewable energy as they can be situated offshore where the winds are stronger and more consistent. They show a great promise for wind farming as the floating wind turbines can be installed in deeper waters which significantly increases available sea area contrary to fixed wind turbines which are restricted to shallow waters close to the shore.

Floating wind turbines generally have a wind turbine comprising a tower, a nacelle and blades attached to a foundation that is afloat and anchored to the seabed by a catenary or a mooring system. Existing floating foundations can be spar-buoy type, wherein the foundation comprises a steel and/or concrete cylinder filled with a ballast of water and gravels to keep it floating up-right. However, these types of floating foundations are not globally suitable for large wind turbines as the draught of the foundation needed for keeping the foundation and the wind turbine afloat is directly related to the size and weight of the wind turbine. This results in extreme draughts for large turbines, making construction, transport and installation complicated.

Other systems use platform constructions, similar to oil and gas type floating platforms. US8471396B2 discloses one such floating wind turbine platform including a floatation frame that includes at least three columns that are coupled to each other with horizontal main beams. A wind turbine tower is mounted in the centre of the three columns or above a tower support column to simplify the system construction and improve the structural strength.

EP2387528A2 discloses a tension-leg offshore submerged platform, in hybrid concrete-steel solution, having a pre-stressed concrete central body, a steel peripheral structure, which is connected to the central body through steel stiffeners, and further to a basement for such a platform.

However, floating foundations in deep waters are exposed to harsh environments of strong winds and large waves. In these environments high forces are induced on constituting elements of the floating foundation. The coupling and/or the connecting elements such as joints struts are particularly vulnerable as the forces are highly concentrated in these regions. Hence, such floating foundations require regular inspections and maintenance.

It would be desirable to provide a floating foundation suitable for large wind turbines that would be resilient to the harsh conditions of the deep-water environment yet relatively cost-effective and simple to construct, transport and install.

### Summary of the invention

Therefore, according to a first aspect of the invention there is provided a floating foundation as defined in claim 1. The floating foundation comprises an elongate hollow member defining a meandering path and having underwater sections, above-water sections and transition sections therebetween, which in use pass through the water surface, the floating foundation comprising at least three transition sections spaced from each other to form a stable base. The elongate hollow member may be in the form of a large tube or a pipe having a wall forming an inner surface and an outer surface and defining one or more internal chambers.

"Meandering" in the context of this application should be understood in the broadest sense of the word to mean "changing direction, not extending linearly". Thus, meandering may be interpreted as winding, zigzagging, curving, twisting, turning, to mention a few.

To aid further description, the following directions are used throughout this application. A direction parallel to the tower of the wind turbine is a vertical direction. A plane perpendicular to the vertical direction is a horizontal plane. When the floating foundation is afloat, the horizontal plane is defined by a water surface. The above-water sections remain clear of the water surface in use and the underwater sections remain submerged during use. Only the transition sections which, when the floating foundation is afloat, pass through the water surface and link the underwater sections to the above-water sections. It will be understood that the precise depth at which the foundation floats will depend on the weight of the turbine and the presence of ballast within the foundation and that parts of the underwater sections may extend above the waterline under certain conditions and vice-versa.

The floating foundation according to the invention comprises at least three transition sections spaced from each other to form a stable base. The base is stable if a system comprising the floating foundation and the wind turbine when displaced from its equilibrium position under the influence of external forces, such as waves and/or the wind, manages to return back to the equilibrium position. In other words, the system has to be sufficiently hydro-mechanically stable to counteract the heeling moments of strong winds, currents and waves. In general, this will require the transition sections to be sufficiently spaced from each other that the centre of buoyancy is distanced from each of them. It will also require that the above-water sections are sufficient in size to not be immersed by the greatest possible force or moment acting on the wind turbine. In embodiments, the transition sections may be spaced from each other by at least 40 m or at least 60 m or even more than 100 m, measured centre to centre.

According to an embodiment, a proximal end of the floating foundation comprises a first transition section configured to fixedly receive the tower of the wind turbine. The tower can be connected to the first transition section by connection means such as one or more of the following: welding, using bolts, flanges, couplers, sleeves, and/or similar. In an embodiment, a portion of the tower and a portion of the first transition region may overlap. For the avoidance of doubt, the tower in this context is considered to start above the waterline with the third transition section of the floating foundation passing through the waterline. Nevertheless, it is not intended to exclude towers that pass through the waterline and connect to the floating foundation underwater. In such cases, the base of the tower may form the third transition section.

According to a further embodiment, distances between successive transition sections in the horizontal plane are equal. The transition regions are spaced equally apart. Preferably, the transition sections form nodes of an equilateral triangle in the horizontal plane. This symmetric configuration provides optimized stability to the base of the floating foundation. This is particularly suited for a foundation that is directionally tethered in position. It will be understood that other configurations and different numbers of transition sections are also possible, with three being the minimum for stability. In particular, a foundation that is tethered to rotate with the wind direction, might benefit from a different distribution of transition sections.

According to another embodiment the meandering path includes straight portions alternating with curved portions. The underwater sections and/or the above-water sections may be substantially linear with curved elbows at the respective ends leading to vertical transition sections. The linear shape of the sections is advantageous since it is the easiest to produce and to assemble. The length of the section has to be chosen to provide adequate spacing of the transition sections and thus the required stability to the floating foundation when the wind turbine is attached to it. This length will depend on the parameters of the wind turbine as well as on the parameters of the floating foundation as well such as the material, diameter of its sections, presence of a heave plate, and similar.

Additionally, the use of one or more straight portions of the underwater section can be advantageous in limiting the draught of the floating foundation. In preferred embodiments, the draught of the loaded foundation may be less than 20 m, or even less than 10 m. It may be subsequently ballasted to a deeper operational position. In the unloaded situation, prior to installation of the tower, draught may be less than 10 m or less than 8 m and as little as 6 m for a foundation of sufficient capacity for a wind turbine of more than 10 MW. Such shallow draught allows easy relocation and/or movements in inshore waters. The straight portion or portions may also provide a stable base when the foundation is onshore or grounded in shallow water.

According to an embodiment, a radius of curvature of the elbow sections may be in a range from 7.5 m to 30 m. Alternatively, no portion of the meandering path has a radius of curvature of less than the diameter of the tube, e.g. no less than 7.5 m for a 7.5 m tube. The resulting stress induced in the elbow during use is thus reduced, allowing relatively thinner walls to be used. The floating foundation is also less prone to fatigue and requires fewer inspections. As noted above, the floating foundation may comprise elbow sections or elbows arranged to interconnect transitions sections with the underwater sections and/or the above-water sections. In terms of the manufacture of the hollow member, the elbows may be integral parts of the underwater sections, above-water sections, and/or the transition sections. The elbow sections are curved portions of the elongate hollow member, wherein the curvature of the elbow sections defines the meandering of the elongate hollow member. Preferably, the elbow sections have a large radius of curvature. This is desirable as such elbows result in lower stresses than the joints of traditional submersibles or jackets. As noted above, the elbow sections preferably have a radius of curvature larger than the tube diameter.

The elongate hollow member may be manufactured from a plurality of short, tubular elements. The tubular elements are interconnected and configured to form different sections of the floating foundation such as the underwater sections, the above-water sections, the transition sections and elbows. The tubular elements can be interconnected using connection means such as one or more of the following: welding, using bolts, flanges, couplers, sleeves, and/or similar. Welding is the most preferred option. The tubular elements have a shape of a hollow cylinder or tube section. Walls of the tubular elements have to be sufficiently thick to sustain forces induced by waves and wind as well as to support the weight of the wind turbine when the tubular elements are interconnected to form the floating foundation. Using tubular elements to form the floating foundation is advantageous as the tubular elements are of smaller size compared to the different sections of the floating foundation and are consequently easier to produce in series. Elements exposed to greater stress may be provided with thicker walls or the whole of the hollow member can be manufactured with a constant wall thickness. In preferred embodiments the walls of the hollow member have a thickness of between 10 mm and 60 mm.

In one embodiment, the wall thickness of different sections of the hollow member is constant. However, different sections of the floating foundation may have different thicknesses with respect to each other. The wall thickness of the above-water sections may be less than the wall thickness of the underwater sections. For example, the wall thickness of the above-water sections may be 75% of the wall thickness of the underwater sections or less. In this manner, the overall weight and material cost of the floating foundation may be optimised.

According to an embodiment, each of the tubular elements comprises an inner surface and at least one ring frame may be attached to the inner surface. The ring frame is connected to the inner surface by welding or similar. The ring frame is preferably in the form of a flat flange configured to abut the inner surface and reinforce the tubular elements against buckling or collapse. However other forms such as T-, angle bars, and similar are foreseeable as well. This allows for a reduction of the thickness of the tubular elements which results in a lighter floating foundation with improved buoyant properties. Surprisingly it has been found that by the use of such ring frames at every 3 m to 10 m and preferably every 4 m of the length of the hollow member, the overall wall thickness required could be reduced by a factor of 3 and the weight of the floating foundation accordingly. Some of the ring frames may completely occlude the interior of the hollow member as sealed bulkheads. The thickness of the ring frames may correspond to 25% to 100% of the thickness of the wall and is preferably in the range of 10 mm and 50 mm. The radial extent of the ring frame may be between 5% and 30% of the diameter of the tubular element or between 5 cm and 100 cm and preferably between 20 cm and 50 cm.

The tubular elements can be manufactured and assembled using conventional monopile construction technology and may be manufactured off-site in a dedicated manufacturing facility. Due to the large radius and/or segmented nature of the curved portions of the path, the tubular elements used for these sections can be formed from single axis curved plates. Consequently, double curved plates are not required in the manufacturing process which significantly simplifies the production and the assembly of the tubular elements. The tubular elements may each have a length of from 3 m to 10m with, for curved elements, this length defined at the outer radius. The use of ring frames may also ensure that the tubular element maintains its shape during the production and assembly process. In this sense, it also permits thinner materials to be used, since otherwise thicker plate would be required to maintain adequate accuracy during manufacture.

The tubular elements may be joined together e.g. by welding or the like to form respective underwater and above-water sections. Preferably, the different sections of the floating foundation are produced and partially assembled at one location such as a factory or a yard close to a harbour or quay and then moved to another location such as at a harbour or a quay or to an inshore or offshore location for final assembly to form the floating foundation.

The different sections may be designed such as to minimize the number and the position of connections points for the final assembly. For example, the different sections may be designed such that connection takes place only at vertically located transition sections. Flanges may be provided between sections but most preferably, the sections are also welded together e.g. using a field weld on-location. In a preferred embodiment, by providing for joints at vertically oriented transition sections, only welds in the horizontal planes are performed during the final assembly of the floating foundation. Welds in the horizontal planes are advantageous as they can be more easily performed in a heavy lift situation e.g. in the harbour or at an offshore location using a crane or jacking mechanism. In an embodiment, the floating foundation may be manufactured from underwater sections and above-water sections that are joined together by a horizontal weld at the respective transition zones. The weld may be arranged at the waterline or in the splash zone. Alternatively, the weld may be located at a position that remains underwater in normal use or at a location that remains above water in normal use.

The installation of the wind turbine can be performed inshore or even offshore. Inshore installation is preferred as it significantly reduces costs and installation time. Furthermore, installation inshore, in shallow water, allows for an easy inspection and commissioning of the system. This is unlike the fixed foundations or spars that need to be installed offshore, i.e. in deep water at the project location. Alternatively, the wind turbine can be installed offshore wherein the position of the wind turbine at the proximal end of the floating foundation provides good access for the (single lift) construction vessels.

Preferably, the hollow member has a circular cross-section. However, it should be noted that the cross-section of the hollow member may be also triangular, rectangular, octagonal, or any other suitable shape, preferably with rounded corners.

The interior of the hollow member may define a single inner chamber, which may also be in open communication with the interior of the tower. For various reasons it may however be desirable to divide this space into a number of separate inner chambers that are hermetically closed with respect to each other. Additionally or alternatively, some ring frames may extend completely across the inner diameter to form bulkheads which are used to define separate inner chambers.

According to an embodiment, at least one inner chamber is configured to receive an amount of water to operate as a ballast tank, allowing the foundation to be ballasted with water during commissioning to achieve an optimal draught for stable operation. The floating foundation may be ballasted with seawater equivalent to more than the combined weight of the foundation and turbine. This will more than double the draught. It will be understood that the ballast should be distributed between the inner chambers and/or different sections of the floating foundation to maintain the stability of the floating foundation in use.

The ballast system can be passive, by which it is meant that the ballast water amount and location remain identical during turbine operations. The inflow of water into the different sections of the foundation may be controlled by sea valves.

Alternatively, the inner chambers may be provided in combination with an active ballast system that can be used to compensate for the static inclination caused by turbine thrust, and may comprise pumps, valves and control equipment. In this manner, it is possible to adjust the buoyancy of the floating foundation e.g. in response to wind load. This is particularly relevant for smaller systems, where wave height and maximum load conditions might otherwise surpass the limits of a 'stationary' ballast.

The active system may either be based on moving ballast between the inner chambers in a closed system, which is a preferred solution, or by means of in- and outflow to the sea.

According to an embodiment, the hollow member may have at least four inner chambers or ballast tanks. The number and the configuration of the inner chambers need not depend on the type of the ballast system. Preferably, the hollow member comprises at least seven inner chambers, wherein the underwater section comprises at least two inner chambers. The inner chambers belonging to different sections are closed by water-tight bulkheads. However, the inner chambers belonging to the same section may be interconnected by e.g. valves, pipes, and/or similar flow control means.

According to an embodiment, the floating foundation further comprises a distal end arranged to receive a heave plate. A heave plate may be in the form of a massive disk or body of steel or other suitably material. The weight of the heave plate is arranged to control a centre of gravity of the floating foundation, improve its stability while limiting the overall draught, especially during assembly.

The floating foundation may be made to a great extent of steel. However, other materials may be present as well such as one or more of the following: iron, concrete, fibreglass, resin, plastic, copper, aluminium and similar.

The floating foundation is preferably configured to support wind turbines with power outputs in the range of 2 MW to above 15 MW and weight of more than 1000 t or even more than 9000 t including the tower, nacelle and blades. The length of the underwater sections and the above-water sections in the horizontal plane may be in the range of between 60 m and 120 m. The diameter of the tubular elements may be in the range between 9 m and 15 m. The weight of the floating foundation when the ballast tank is empty may be in range between 2500 t and 9000 t.

According to an embodiment, the floating foundation is fixed to the seabed by a catenary or a taught or semi-taught system. The precise form of the mooring system will depend on various factors including the depth and nature of the sea bed. A semi-taught mooring system may be preferred for water depths of less than 200 m. A catenary system may be preferred for water depths above 200 m.

The invention further contemplates a floating foundation comprising an elongate hollow member in the form of a single bent tube. The bent tube may be without branches or bifurcations above the water line or may be completely devoid of branches or bifurcations, having only a proximal end for receiving the tower of the wind turbine and a distal end. In an embodiment, the distal end is an underwater section. The floating foundation may also be devoid of struts, spars, braces or junctions. In this context, it is understood that it is devoid of other additional external structures forming part of the structural integrity and load bearing capacity of the floating foundation. This is not intended to exclude the presence of auxiliary structures such as walkways, ladders, decks, lifting and anchoring points and the like.

The invention further relates to a floating wind turbine having a tower and a floating foundation as described above or hereinafter. The tower may be connected to a proximal end of the hollow member, in particular, the tower may be aligned with the hollow member, which should thus preferably be vertically oriented at this location. A cross-section of the tower may correspond to that of the hollow member at a location of the connection such that the tower may be considered an extension of the elongate hollow member.

The tower may be connected to the floating foundation by any suitable means as detailed above, including a flanged connection or a welded connection. A welded connection using a field joint technique may be preferred as this requires less accurate manufacture of the surfaces to be joined. Another alternative is a sleeve joint.

According to another aspect of the invention, there is provided a method for constructing a floating foundation for a wind turbine. The method comprises steps of:
- providing a plurality of tubular elements;
- interconnecting tubular elements to form at least one non-linear underwater section and at least one non-linear above-water section;
- launching the underwater section to a floating position; and
- assembling the above-water section onto the floating underwater section to form an elongate hollow member.

In a preferred embodiment, the tubular elements comprise ring frames. Alternatively or additionally, each tubular element has a length and a diameter that is greater than the length. The ring frames may be connected by welding. Additionally, the underwater sections and the above-water sections may also be assembled by welding.

The construction may be performed of a single unit at a time or multiple units can be produced in series in the form of a production line.

In a further embodiment, the tubular elements are interconnected onshore at a first location and the above-water and underwater sections are assembled together at a second location such as at a quayside, pier, or an offshore location. In this context, quayside is understood to be a location whence the different sections of the floating foundation can be lifted into the water using one or more lifting means such as heavy lift cranes, floating crane vessels, jacking systems, and/or launching barges.

A distinction is thus made between the connection together of the tubular elements, which takes place in a production environment, and the assembly of the sections which takes place in the sheltered assembly location such as a harbour, bay or fjord. Advantageously, these sections can be transported to the quayside where they can be assembled afloat at a shallow water location or even aground.

The quayside may be arranged to have a storing area and an assembly area. The storing area may be used for stacking a plurality of different sections of the floating foundation. The sections can be moved from the storing area by self-propelled modular transporters (onshore) or barges (afloat) to the assembly area, which is in close proximity of the storing area. The assembly area may comprise the lifting means to unload and/or lift sections of the floating foundation into the water. The sections are assembled one by one while afloat. To keep the sections afloat during the assembly, lifting bags may be attached to the sides of the sections and/or the inner chambers may be ballasted with water.

Unlike a dry-dock assembly, assembly afloat does not require large assembly areas as the sections may be easily moved/rotated by winches, barges, carriers, ships, or similar during the assembly process. After the assembly, the floating foundation can be towed away by towing means such as a ship or a barge to clear the assembly area for the next assembly. This reduces the assembly time significantly, allows for flexibility during the series production, and allows for mass assembly of the floating foundation at a relatively small assembly area.

In a still further embodiment, the hollow member has a proximal end and the method comprises connecting a wind turbine tower to the proximal end of the hollow member. This step may also take place at or adjacent to the second location. Preferably, a tower of the wind turbine is installed above the water surface. If this takes place inshore, the completed wind turbine may then be towed to an offshore location and the foundation ballasted and anchored. In an alternative, the floating foundation can be towed to an offshore location and the tower and wind turbine installed offshore. The shallow draught of the unballasted floating foundation makes for ease of navigation in inshore waters. Electrical cables of the wind turbine preferably pass through the tower and leave the interior at around the height of the boarding deck level of the first above-water section. The cable may leave the foundation via a J-tube. This structure allows for easy installation of the export cable and avoids hull penetrations that are permanently submerged.

Furthermore, the floating foundation has a distal end and the method further comprises connecting a heave plate to the distal end. The heave plate improves the motional behaviour of the foundation by decoupling heave and pitch motion of the foundation when afloat. Furthermore, the heave plate limits the draught of the foundation by compensating the submerged volume of the underwater section allowing to assemble the foundation and install the wind turbine at shallow draughts.

Further advantages of the disclosed invention will become evident in the following.

### Brief description of the drawings

The present invention will be discussed in more detail below, with reference to the attached drawings, in which:
Fig. 1 depicts a floating wind turbine installation in perspective view;
Fig. 2 depicts the installation of Fig. 1 in side elevation;
Fig. 3 depicts the installation of Fig. 2 in plan view;
Fig. 4 depicts the sections of the floating foundation of Figs 1 to 3 prior to assembly;
Fig. 5 depicts a tubular element for forming the floating foundation of Fig. 4.
Fig. 6 depicts a zoomed area of Fig. 1 around a curved portion of an above-water section;
Figs 7 to 11 illustrate alternative embodiments of the invention.

### Description of embodiments

The invention will be explained in more detail below with reference to drawings in which illustrative embodiments thereof are shown. The drawings are intended exclusively for illustrative purposes and not as a restriction of the inventive concept which is to cover all modifications, equivalents, and alternatives falling within the scope of the present invention. The scope of the invention is only limited by the definitions presented in the appended claims.

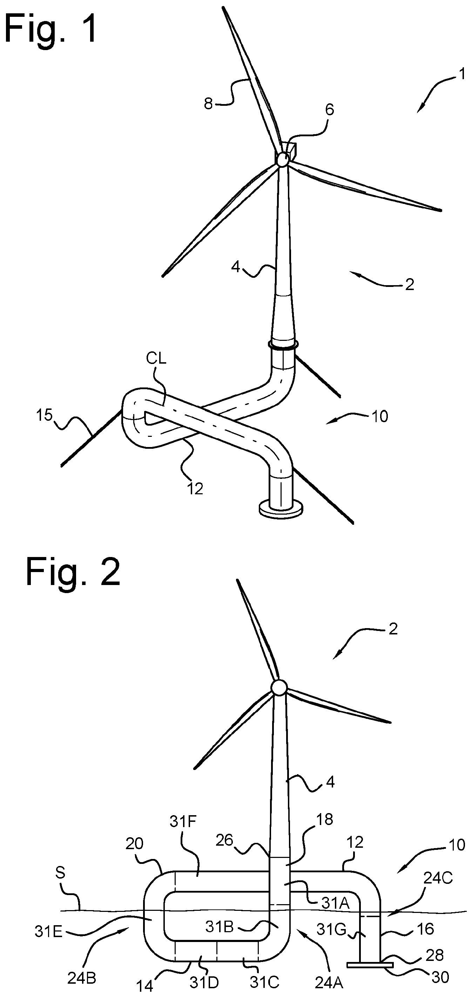

Figure 1 illustrates in perspective view a first embodiment of a floating wind turbine installation 1 according to the present invention. The installation 1 comprises a wind turbine 2 having a tower 4, a nacelle 6 and blades 8. The wind turbine is mounted on a floating foundation 10 comprising an elongate hollow member 12, having a centreline CL defines a meandering path, to be further described below. The installation 1 is kept in place by mooring lines 15. The illustrated wind turbine 2 has a rated capacity of 15MW and a weight of 2400 t. The height of the nacelle 6 above the waterline is around 150 m and the blade length is around 110 m. The following description of the floating foundation 10 is based on a turbine of this scale. The skilled person will nevertheless, understand that dimensions of the foundation 10 will vary according to the size of the turbine.

Figure 2 shows the installation 1 of Fig. 1 in side elevation in the installed condition, floating on a body of water having a surface S. The elongate hollow member 12 has underwater sections 14, 16 and above-water sections 18, 20. Transition sections 24 A,B,C pass through the splash zone at the water surface S. The elongate hollow member 12 has a first, proximal end 26, connected to a base of the tower 4 and a second, distal end 28 provided with a heave plate 30. Figure 2 further shows compartmentation of the interior of the elongate hollow member 12 into seven inner chambers 31 A,B,C,D,E,F,G. The inner chambers 31 B,C,D,E,G are ballasted with sea water.. The inner chambers are separated by water-tight bulkheads.

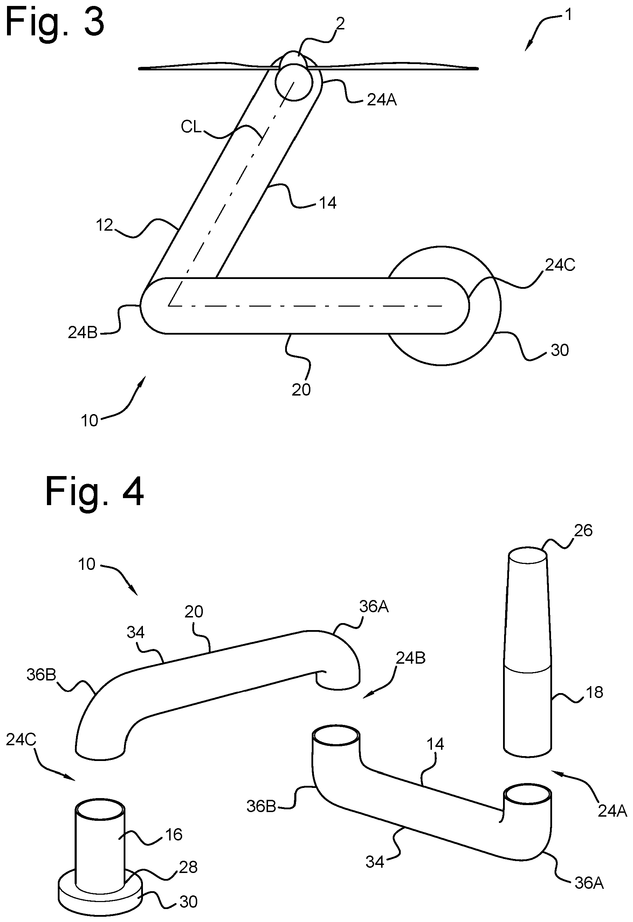

Figure 3 shows the installation 1 of Fig 2 in plan view, illustrating the positions of the transition sections 24 A,B,C in the horizontal plain. As can be seen, in the illustrated embodiment, these transition sections are located at the corners of an equilateral triangle. The first underwater section 14 and the second above-water section 20 form two sides of the triangle. In this case, the length of the respective sides is 105 m calculated at the centreline CL of the hollow member.

Figure 4 shows in perspective view, the floating foundation 10 of Figs 1 to 3 prior to assembly. The elongate hollow body 12 is formed of four sections. A first above-water section 18 extends from the proximal end 26 to the first transition section 24A. A first underwater section 14 extends from the first transition section 24A to the second transition section 24B. A second above-water section 20 extends from the second transition section 24B to the third transition section 24C. A second underwater section 16 extends from the third transition section 24C to the heave plate 30 at the distal end 28.

As can be seen, the first underwater section 14 and second above-water section 20 have a straight portion 34 and two curved portions 36 A,B. As can also be seen, each of the sections 14, 16, 18, 20 is formed of a plurality of tubular elements 40 welded together in abutting relation.

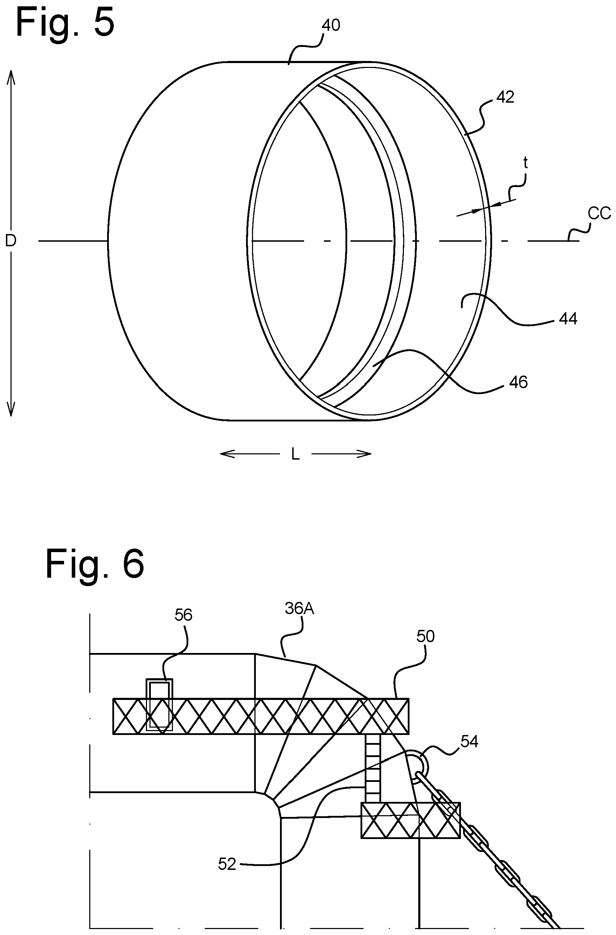

Figure 5 illustrates in perspective view a single tubular element 40 from part of a straight portion 34 of the hollow member 12 of Figure 4. The element 40 is a circular tubular section of diameter D having a wall 42 of thickness t and an inner surface 44. The tubular element 40 has a length L along the centreline CL. For the illustrated embodiment, the diameter D is 15 m and the length L is 5 m. The thickness t is 35 mm. Attached to the inner surface 44 is a ring frame 46, which extends radially inwardly by a distance of 50 cm. The ring frame 46 provides additional stiffening to the tubular element 40 allowing the thickness t to be kept small and material and weight to be reduced.

In the illustrated embodiment, the straight portions 34 of the underwater section 14 and above-water section 20 are substantially parallel to the water surface S and the curved portions 36 A,B form segmented elbows having a large average radius of around 15 m. The transition sections 24 A,B,C on the other hand are substantially perpendicular to the water surface S. The skilled person will nevertheless understand that the floating foundation 10 may be formed without any straight sections and the elongate hollow member 12 may be continuously curved.

Figure 6 shows a close up of part of a segmented curved portion 36A of second above-water section 20. As can be seen in this view, the curved portion 36A is made up of a series of straight tubular elements with diagonal ends. This allows the use of single axis curved plates, which is significantly simpler than the use of double curved plate. The above-water section 20 has walkways 50, ladders 52 and anchoring point 54 from which mooring chain 15 extends. The walkways 50 also give access to a door or manhole 56 to the interior of the elongate member.

Due to its simple concept, the floating foundation according to the invention is fully scalable and suitable for wind turbines of different sizes. The floating foundation can be provided with an active ballast system or a passive ballast system depending on the needs of the user and the conditions of the environment at the project location. Exemplary characteristics of different embodiments of the floating foundation according to the invention are shown in Table 1.

**Table 1.**

| Turbine | Waves (Hs) | Outfitting | Centre spacing, typical diameter | Foundation weight |
|---|---|---|---|---|
| 9.5 MW | 6.5 m | Active | 65 m, 9.3 m | 2500 t |
| 9.5 MW | 6.5 m | Passive | 84 m, 12 m | 3900 t |
| 9.5 MW | 11 m | Active | 65 m, 9.3 m | in development |
| 9.5 MW | 11 m | Passive | 84 m, 12 m | 4900 t |
| 15 MW | 6.5 m | Active | 81 m, 11.6 m | 4700 t |
| 15 MW | 6.5 m | Passive | 105 m, 15 m | 7600 t |
| 15 MW | 11 m | Active | 81 m, 11.6 m | in development |
| 15 MW | 11 m | Passive | 105 m, 15 m | 9000 t |

The floating foundation according to the invention can be efficiently produced in series since many elements are identical. Further, the sections can be easily stored and moved for a final assembly. The final assembly can be performed inshore or afloat with only three welds or other types of connection. The minimal draught for the floating foundation may be just 6 m. All the assembly section welds are in the horizontal plane which simplifies the welding process by use of cranes and float-overs with barges.

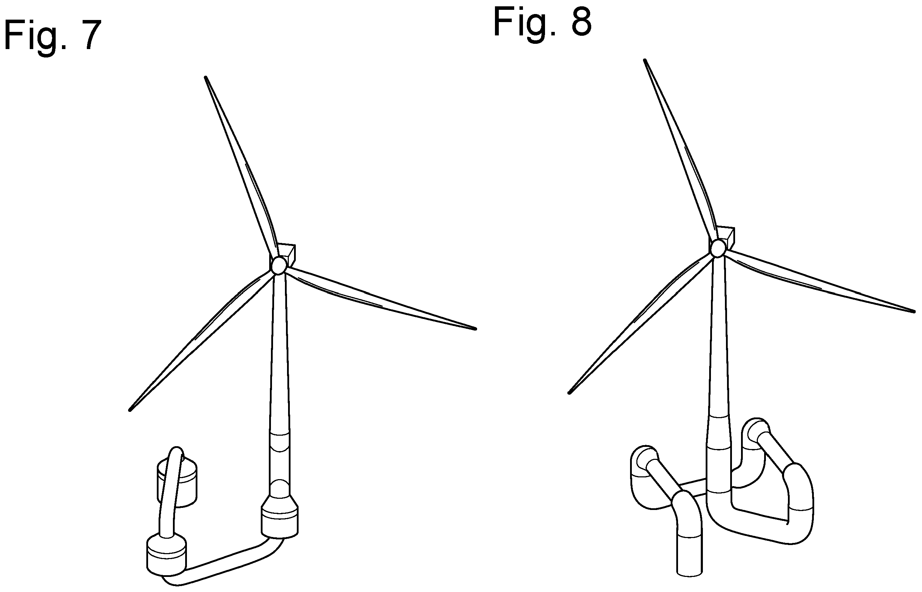

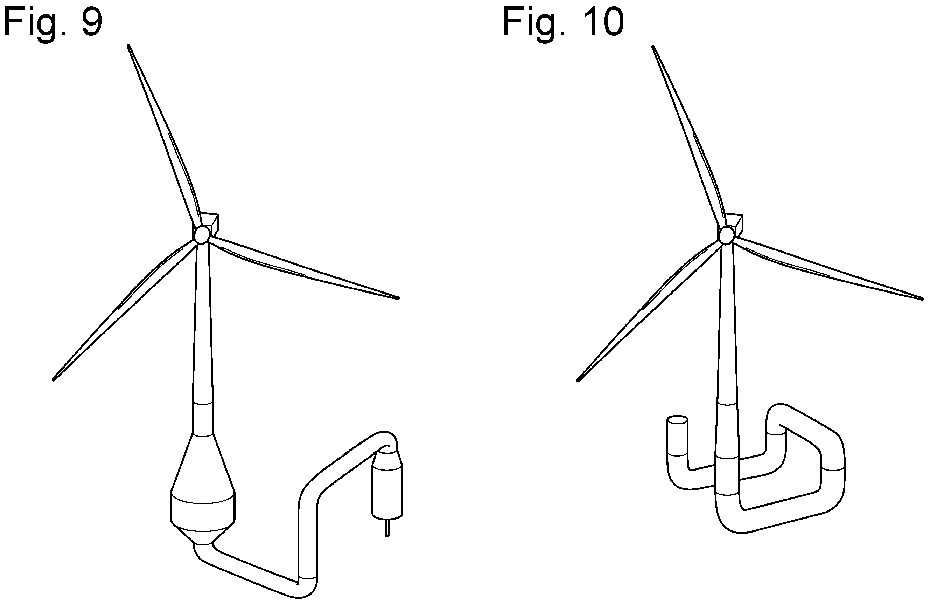

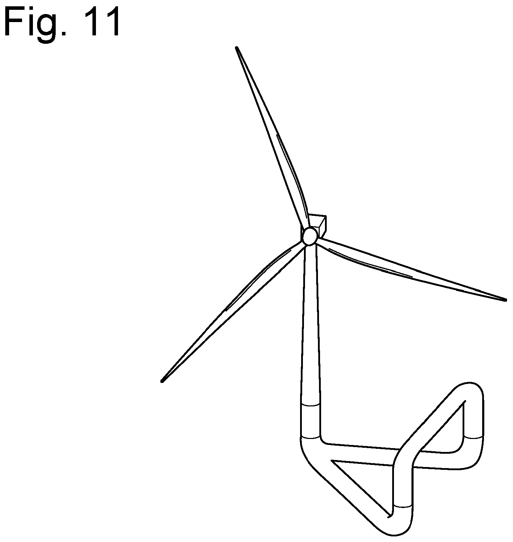

Further alternative embodiments are shown in Figs 7 to 11, which illustrate how the tubular member need not be of constant cross-section and how more than three transition sections may be provided. According to Figure 11, the tubular member forms a closed loop and has no distal end. It will be noted that in this embodiment, there is a single bifurcation of the tubular member but this takes place below the water line and there are still three transition sections, which in this embodiment form an isosceles triangle.

The present invention may be embodied in other specific forms without departing from its essential characteristics. The described embodiments are to be considered in all respects only as illustrative and not restrictive to the inventive concept. The scope of the invention is, therefore, indicated by the appended claims rather than by the foregoing description. It will be apparent to the person skilled in the art that alternative and equivalent embodiments of the invention can be conceived and reduced to practice. In addition, many modifications may be made to adapt a particular configuration or material to the teachings of the invention without departing from the essential scope thereof.

All modifications which come within the meaning and range of equivalency of the claims are to be embraced within their scope.

## Claims

1. A floating foundation (10) for an offshore wind turbine (2) having a tower (4), the floating foundation comprising an elongate hollow member (12) defining a meandering path and having underwater sections (14,16), above-water sections (18, 20) and transition sections (24) therebetween, which in use pass through the water surface, the floating foundation comprising at least three transition sections spaced from each other to form a stable base.

2. The floating foundation of claim 1, wherein a proximal end of the hollow member comprises a first transition section (24A) configured to fixedly receive the tower of the wind turbine.

3. The floating foundation of claim 1 or claim 2, wherein distances between successive transition sections are equal and optionally, wherein the transition sections form nodes of an equilateral triangle in a horizontal plane.

4. The floating foundation according to any preceding claim, wherein the meandering path includes straight portions alternating with curved portions.

5. The floating foundation according to any preceding claim, wherein the transition sections are substantially vertical.

6. The floating foundation according to any preceding claim, wherein the elongate hollow member has an inner surface (44) and a plurality of ring frames (46) are attached to the inner surface extending radially inwardly.

7. The floating foundation according to any preceding claim, wherein the hollow member is a single bent tube, preferably having a circular external cross-section with a diameter of at least 7.5 m and/or without bifurcations or branches and preferably, no portion of the meandering path has a radius of curvature of less than the diameter of the tube.

8. The floating foundation according to any preceding claim, wherein an interior of the hollow member comprises a plurality of separated ballast tanks (31).

9. The floating foundation according to any preceding claim, wherein the hollow member further comprises a distal end provided with a heave plate (30).

10. The floating foundation according to any preceding claim, wherein the floating foundation is made for the greater part of steel and is preferably configured to support a wind turbine with a total weight of more than 1000 t..

11. A floating wind turbine having a tower and a floating foundation according to any one of the preceding claims, wherein the tower is connected to a proximal end of the hollow member and a cross-section of the tower preferably corresponds to that of the hollow member at a location of the connection.

12. A method for constructing a floating foundation for an offshore wind turbine, according to any one of the preceding claims, wherein the method comprises steps of:
- providing a plurality of tubular elements;
- interconnecting tubular elements together to form at least one non-linear underwater section and at least one non-linear above-water section;
- launching the underwater section to a floating position; and
- assembling the above-water section onto the floating underwater section to form an elongate hollow member.

13. The method according to claim 12, wherein the tubular elements each comprise one or more ring frames and/or each has a length and a diameter that is greater than the length.

14. The method according to any one of claims 12 or 13, comprising at least two underwater sections, whereby the two underwater sections are both launched to a floating position and the above-water section is assembled to join the underwater sections together.

15. The method according to any one of claims 12 to 14, wherein the tubular elements are interconnected onshore at a first location and the above-water and underwater sections are assembled together preferably by welding at a horizontally oriented joint, at a remote second floating location or quayside.

## Patentansprüche

1. Schwimmfundament (10) für eine Offshore-Windturbine (2), die einen Turm (4) hat, wobei das Schwimmfundament einen länglichen Hohlkörper (12) aufweist, der einen mäanderförmigen Pfad definiert und Unterwassersektionen (14, 16), Überwassersektionen (18, 20) und dazwischen Übergangssektionen (24) hat, die in Verwendung durch die Wasseroberfläche hindurchtreten, wobei das Schwimmfundament mindestens drei Übergangssektionen aufweist, die beabstandet voneinander sind, um eine stabile Basis zu bilden.

2. Schwimmfundament nach Anspruch 1, wobei ein Proximalende des Hohlkörpers eine erste Übergangssektion (24A) aufweist, die so konfiguriert ist, dass sie den Turm der Windturbine fest aufnimmt.

3. Schwimmfundament nach Anspruch 1 oder Anspruch 2, wobei Abstände zwischen den aufeinanderfolgenden Übergangssektionen gleich sind, und wobei die Übergangssektionen optional Knotenpunkte eines gleichseitigen Dreiecks in der Horizontalebene bilden.

4. Schwimmfundament nach einem der vorhergehenden Ansprüche, wobei der mäanderförmige Pfad gerade Abschnitte umfasst, die sich mit gebogenen Abschnitten abwechseln.

5. Schwimmfundament nach einem der vorhergehenden Ansprüche, wobei die Übergangssektionen im Wesentlichen vertikal sind.

6. Schwimmfundament nach einem der vorhergehenden Ansprüche, wobei der längliche Hohlkörper eine Innenfläche (44) hat und eine Vielzahl Ringrahmen (46) an der Innenfläche angebracht sind, die sich radial nach Innen erstrecken.

7. Schwimmfundament nach einem der vorhergehenden Ansprüche, wobei der Hohlkörper ein einzelnes gebogenes Rohr ist, das vorzugsweise einen runden äußeren Querschnitt mit einem Durchmesser von mindestens 7,5 m hat und/oder ohne Gabelungen oder Abzweigungen ist, und vorzugsweise kein Abschnitt des mäanderförmigen Pfads einen Kurvenradius hat, der kleiner als der Durchmesser des Rohrs ist.

8. Schwimmfundament nach einem der vorhergehenden Ansprüche, wobei ein Inneres des Hohlkörpers eine Vielzahl getrennter Ballasttanks (31) aufweist.

9. Schwimmfundament nach einem der vorhergehenden Ansprüche, wobei der Hohlkörper ferner ein Distalende aufweist, das mit einer Dämpfungsplatte (30) versehen ist.

10. Schwimmfundament nach einem der vorhergehenden Ansprüche, wobei das Schwimmfundament überwiegend aus Stahl hergestellt ist und vorzugsweise so konfiguriert ist, dass es eine Windturbine mit einem Gesamtgewicht von mehr als 1000 t stützt.

11. Schwimmwindturbine, die einen Turm und ein Schwimmfundament hat, gemäß einem der vorhergehenden Ansprüche, wobei der Turm mit einem Proximalende des Hohlkörpers verbunden ist und ein Querschnitt des Turms vorzugsweise dem des Hohlkörpers an der Stelle der Verbindung entspricht.

12. Verfahren zum Errichten eines Schwimmfundaments für eine Offshore-Windturbine, gemäß einem der vorhergehenden Ansprüche, wobei das Verfahren folgende Schritte aufweist:
Vorsehen einer Vielzahl rohrförmiger Elemente;
Verbinden der rohrförmigen Elemente miteinander, um mindestens eine nicht lineare Unterwassersektion und mindestens eine nicht lineare Überwassersektionen zu bilden;
zu Wasserlassen der Unterwassersektion in eine Schwimmposition; und
Zusammenbauen der Überwassersektion auf der schwimmenden Unterwassersektion, um einen länglichen Hohlkörper zu bilden.

13. Verfahren nach Anspruch 12, wobei die rohrförmigen Elemente jeweils einen oder mehrere Ringrahmen haben und/oder jeweils eine Länge und einen Durchmesser, der größer als die Länge ist, haben.

14. Verfahren nach einem der Ansprüche 12 oder 13, wobei dieses mindestens zwei Unterwassersektionen aufweist, wodurch die zwei Unterwassersektionen beide in eine Schwimmposition zu Wasser gelassen werden und die Überwassersektion zusammengebaut wird, um die Unterwassersektionen miteinander zu verbinden.

15. Verfahren nach einem der Ansprüche 12 bis 14, wobei die rohrförmigen Elemente Onshore an einer ersten Stelle verbunden werden und die Überwasser- und Unterwassersektionen miteinander, vorzugsweise durch Schweißen an einer horizontal ausgerichteten Verbindung, an einer entfernten zweiten Schwimmstelle oder Hafenkai zusammengebaut werden.

## Revendications

1. Fondation flottante (10) pour une éolienne en mer (2) ayant une tour (4), la fondation flottante comprenant un élément creux allongé (12) définissant un tracé sinueux et ayant des sections submergées (14, 16), des sections émergées (18, 20) et des sections de transition (24) entre celles-ci, qui, en service, traversent la surface de l'eau, la fondation flottante comprenant au moins trois sections de transition espacées les unes des autres pour former une base stable.

2. Fondation flottante selon la revendication 1, où une extrémité proximale de l'élément creux comprend une première section de transition (24A) configurée pour recevoir de manière fixe la tour de l'éolienne.

3. Fondation flottante selon la revendication 1 ou la revendication 2, où des distances entre des sections de transition successives sont égales et, facultativement, où les sections de transition forment les sommets d'un triangle équilatéral dans un plan horizontal.

4. Fondation flottante selon l'une quelconque des revendications précédentes, où le tracé sinueux comprend des parties droites alternant avec des parties courbes.

5. Fondation flottante selon l'une quelconque des revendications précédentes, où les sections de transition sont sensiblement verticales.

6. Fondation flottante selon l'une quelconque des revendications précédentes, où l'élément creux allongé a une surface intérieure (44) et une pluralité de cadres annulaires (46) sont fixés à la surface intérieure s'étendant radialement vers l'intérieur.

7. Fondation flottante selon l'une quelconque des revendications précédentes, où l'élément creux est un tube unique cintré, ayant de préférence une section transversale externe circulaire d'un diamètre d'au moins 7,5 m et/ou sans bifurcations ni ramifications, et de préférence, aucune partie du tracé sinueux n'ayant un rayon de courbure inférieur au diamètre du tube.

8. Fondation flottante selon l'une quelconque des revendications précédentes, où l'intérieur de l'élément creux comprend une pluralité de réservoirs de ballast séparés (31).

9. Fondation flottante selon l'une quelconque des revendications précédentes, où l'élément creux comprend en outre une extrémité distale munie d'une plaque anti-pilonnement (30).

10. Fondation flottante selon l'une quelconque des revendications précédentes, où la fondation flottante est constituée en grande partie d'acier et est de préférence configurée pour supporter une éolienne d'un poids total supérieur à 1000 t.

11. Éolienne flottante ayant une tour et une fondation flottante selon l'une quelconque des revendications précédentes, où la tour est reliée à une extrémité proximale de l'élément creux et une section transversale de la tour correspond de préférence à celle de l'élément creux à un emplacement de la connexion.

12. Procédé de construction d'une fondation flottante pour une éolienne en mer, selon l'une quelconque des revendications précédentes, où le procédé comprend les étapes consistant à :
- fournir une pluralité d'éléments tubulaires ;
- interconnecter des éléments tubulaires ensemble pour former au moins une section submergée non linéaire et au moins une section émergée non linéaire ;
- mettre la section submergée en position flottante ; et
- assembler la section émergée sur la section submergée flottante pour former un élément creux allongé.

13. Procédé selon la revendication 12, où les éléments tubulaires comprennent chacun un ou plusieurs cadres annulaires et/ou chacun a une longueur et un diamètre qui est supérieur à la longueur.

14. Procédé selon l'une quelconque des revendications 12 ou 13, comprenant au moins deux sections submergées, dans lequel les deux sections submergées sont toutes les deux lancées vers une position flottante et la section émergée est assemblée pour joindre les sections submergées ensemble.

15. Procédé selon l'une quelconque des revendications 12 à 14, où les éléments tubulaires sont interconnectés à terre en un premier emplacement et les sections submergées et émergées sont assemblées entre elles de préférence par soudage à un joint orienté horizontalement, en un deuxième emplacement flottant distant ou à quai.
